# EUROPÄISCHE PATENTSCHRIFT

(11) **EP 1 739 312 B1**
(45) Veröffentlichungstag und Bekanntmachung des Hinweises auf die Patenterteilung: **20.01.2010**
(21) Anmeldenummer: 05105752.9
(22) Anmeldetag: 28.06.2005
(51) Int. Cl.: F15B 1/26, B62D 5/07

(54) **Ausgleichsbehälter mit Flüssigkeitsnivellierung**
Expansion reservoir with liquid levelling
Réservoir d'expansion avec nivellement de liquide

(43) Veröffentlichungstag der Anmeldung: 03.01.2007
(73) Patentinhaber: Ford Global Technologies, LLC, Dearborn, MI 48126 (US)
(72) Erfinder: Figura, Michael Georg, 41542, Dormagen (DE)
(74) Vertreter: Drömer, Hans-Carsten

(56) Entgegenhaltungen:
- DE-A1-102004 045 138
- US-B1- 6 311 724
- PATENT ABSTRACTS OF JAPAN Bd. 1999, Nr. 03, 31. März 1999 (1999-03-31) -& JP 10 324255 A (KOYO SEIKO CO LTD), 8. Dezember 1998 (1998-12-08)
- PATENT ABSTRACTS OF JAPAN Bd. 2000, Nr. 07, 29. September 2000 (2000-09-29) -& JP 2000 095125 A (TOYO ROKI MFG CO LTD; HONDA MOTOR CO LTD), 4. April 2000 (2000-04-04)
- PATENT ABSTRACTS OF JAPAN Bd. 2003, Nr. 08, 6. August 2003 (2003-08-06) & JP 2003 097502 A (KOYO SEIKO CO LTD), 3. April 2003 (2003-04-03)

## Beschreibung

Die Erfindung betrifft einen Behälter einem Boden und einem dazu gegenüberliegend angeordneten Kopfbereich, der eine Einfüllöffnung aufweist, wobei die Einfüllöffnung von einem Einfüllstutzen gebildet ist, der zwei Wandabschnitte aufweist, von denen ein erster Wandabschnitt aus dem Behälter herausragt und im Querschnitt gesehen parallel zur Mittelachse verläuft und konzentrisch um die Mittelachse angeordnet ist, wobei ein sich an dem ersten Wandabschnitt anschließender zweiter Wandabschnitt im Behälterinneren mit seiner Stirnkante im Querschnitt gesehen in Richtung zur Mittelachse orientiert ist, so daß sich die Einfüllöffnung in Richtung zum Boden konusartig verjüngt, und wobei ein im Behälterinneren angeordnetes Nivellierelement um die Einfüllöffnung herum angeordnet ist und sich mit seinem freien Ende in Richtung zum Boden erstreckt.

Die JP 10-324255 offenbart einen Behälter, der in der Anzahl seiner Einzelteile reduziert sein soll, wobei gleichzeitig der Zusammenbau des Behälters erleichtert werden soll, so dass die Herstellungskosten mit diesen Maßnahmen reduziert werden sollen. Eine Leckage der in den Behälter eingefüllten Betriebsstoffe nach außen über die Einfüllöffnung bzw. den in einem Deckel angeordneten Belüftungslöchern soll verhindert werden, indem den Deckel benetzendes Öl in einem Inneren des Deckels gesammelt wird. Weiter soll ein Verstopfen des Ölfilters beim Einfüllen der Betriebsflüssigkeit verhindert werden, indem das einfließende Öl zum Umfang des weitergeführten Einfüllstutzens geleitet wird, so dass der Ölstrom umfangsmäßig verteilt wird. Mittels Öffnungen in dem weitergeführten Einfüllstutzen soll vermieden werden, dass sich das Öl mit Luft vermischt.

Die JP 2000-095125 offenbart einen Behälter, in dem eine Trichterbildung des ausfließenden Öl verhindert werden soll. Dies soll erreicht werden, indem an einen weitergeführten Einfüllstutzen Prallbleche angeordnet werden, die eine Bewegung des Öls um den Einfüllstutzen herum verhindern. Mittels Schlitzartiger Öffnungen in dem Einfüllstutzen soll das Einfüllen des Öls erleichtert werden, wobei gleichzeitig vermieden werden soll, dass in einer dem Behälter zugeordneten Einlassleitung Luft absorbiert wird.

Behälter sind bekannt und werden beispielsweise als Ausgleichsbehälter für Betriebsflüssigkeiten eines Kraftfahrzeuges verwendet. Beispielsweise kann ein solcher Ausgleichsbehälter die Flüssigkeit einer Servo-Lenkanlage des Kraftfahrzeuges aufnehmen.

Die Behälter bzw. Ausgleichsbehälter sind heutzutage beispielsweise im Motorraum bzw. im Frontbereich des Kraftfahrzeuges angeordnet. Aufgrund der beengten Raumverhältnisse im Motorraum sind die Ausgleichsbehälter relativ klein ausgestaltet, wobei die Ausgleichsbehälter insbesondere eine relativ kleine Höhenerstreckung aufweisen.

Als ein Hauptnachteil der bekannten Ausgleichsbehälter ist anzusehen, daß die in dem Behälter aufgenommene Flüssigkeit derart in Bewegung gerät, daß Spritzer an einen den Behälter verschließenden Deckel gelangen können. Wird der Behälter nun zu Servicezwecken, beispielsweise zum Auffüllen, geöffnet, können die an dem Deckel befindlichen Tropfen der Flüssigkeit abtropfen und in die Umwelt gelangen. Dies bewirkt aber eine nicht hinzunehmende Umweltverschmutzung, da die in dem Ausgleichsbehälter aufgenommenen Flüssigkeiten üblicherweise Hydraulikflüssigkeiten oder Flüssigkeiten sind, die mit synthetischen oder anderen Ölen vermischt sind. Nachteilig ist weiter, daß die Flüssigkeit auch durch in dem Deckel angeordnete Be- und Entlüftungsvorrichtungen in die Umwelt gelangen kann, wenn die Flüssigkeit in Bewegung gerät, oder der gefüllte Behälter eingebaut wird.

Die Bewegung der in dem Behälter aufgenommenen Flüssigkeit kann z. B. durch raue Straßenverhältnisse hervorgerufen werden, wobei beispielsweise Schlaglöcher oder dergleichen Unebenheiten in der Fahrbahn zu einer derartigen Bewegung der Flüssigkeit in dem Behälter führen, daß die angesprochenen Spritzer den Deckel von der Behälterinnenseite her benetzen. Selbstverständlich kann die Flüssigkeitsbewegung aber auch durch Vibrationen hervorgerufen werden. Möglicherweise kann eine solche Benetzung aber auch auftreten, wenn der Behälter in das Kraftfahrzeug eingebaut wird.

Um zu vermeiden, daß die Spritzer den Deckel benetzen, ist es bekannt, daß die Behälter bzw. Ausgleichsbehälter mit einem horizontalen Schwallblech versehen werden. Nachteilig bei dieser Ausgestaltung ist jedoch, daß der Einfüllprozeß der Flüssigkeit in den Behälter negativ beeinflußt wird, wobei gleichzeitig der Einfüllhals des Einfüllwerkzeugs nicht weit genug in den Behälter hineinragen kann, da eine Einstecklänge des Einfüllwerkzeugs durch das Schwallblech begrenzt ist. Dabei kann der Einfüllprozeß derart negativ beeinflußt werden, daß Flüssigkeit beispielsweise durch einen Flüssigkeitsstau in dem Einfüllstutzen neben die Einfüllöffnung gelangt, was wiederum zu einer nicht hinnehmbaren Umweltverschmutzung führen kann.

Der Erfindung liegt die Aufgabe zugrunde, einen Behälter der eingangs genannten Art mit einfachen Mitteln dahin gehend zu verbessern, daß ein Benetzen des Deckels mit Flüssigkeit beispielsweise durch Spritzer oder dergleichen vermieden wird, so daß Umweltverschmutzungen durch herabtropfende Flüssigkeit, beispielsweise von dem Deckel, vermeidbar sind.

Erfindungsgemäß wird die Aufgabe dadurch gelöst, dass das Nivellierelement derart lamellenartig aus einer Vielzahl von Stäben gebildet ist, dass eine Flüssigkeitsoberfläche im Bereich des Inneren des Nivellierelementes eingeebnet wird, wenn die Flüssigkeit in Schwappbewegung gerät, wobei die Stäbe umfangsmäßig um die verjüngte Einfüllöffnung herum beabstandet sind, wobei zwischen den Stäben Öffnungen angeordnet sind.

Der Behälter gemäß der Erfindung ist ein Ausgleichsbehälter zur Aufnahme einer Betriebsflüssigkeit eines Kraftfahrzeuges. Beispielsweise kann der Behälter die Flüssigkeit einer Servo-Lenkanlage aufnehmen. Natürlich kann der Behälter aber auch jede andere Betriebsflüssigkeit des Kraftfahrzeuges aufnehmen.

Mittels des erfindungsgemäßen Nivellierelementes wird erreicht, daß die Betriebsflüssigkeit mit ihrer Oberfläche relativ nah an einen Einfüllstutzen des Ausgleichsbehälters herangeführt werden kann, wobei das Nivellierelement die Entstehung von Flüssigkeitsspritzern im Bereich des Nivellierelementes unterbindet, bzw. die Flüssigkeitsoberfläche einnivelliert bzw. einebnet, wenn die Flüssigkeit in dem Behälter beispielsweise durch raue Straßenverhältnisse in Bewegung gerät. Dadurch, daß keine Spritzer oder relativ wenig Spritzer im Bereich des Nivellierelementes entstehen, die jedoch nicht zum Deckel gelangen können, wird vorteilhaft vermieden, daß die Flüssigkeit, obwohl diese mit ihrer Oberfläche relativ nah an der Einfüllöffnung angeordnet ist, den Deckel, welcher die Einfüllöffnung verschließt, benetzt.

Bei Servicearbeiten, beispielsweise um den Ausgleichsbehälter auf ein erforderliches Flüssigkeitsniveau aufzufüllen, wird so vorteilhaft vermieden, daß Flüssigkeit von dem Deckel abtropfen kann und die Umwelt nicht weiter verschmutzt. Gleichzeitig ist vorteilhaft, daß bei dem Auffüllvorgang des Behälters keine Flüssigkeit mehr neben diesen gelangen kann, da der Auffüllvorgang nicht negativ beeinflußt wird, indem beispielsweise ein Flüssigkeitsstau in dem Einfüllstutzen vermeidbar ist, ohne auf eine Einfüllgeschwindigkeit der aufzufüllenden Flüssigkeit achten zu müssen.

Um zu erreichen, daß im Bereich des Nivellierelementes keine Spritzer mehr in Richtung zum Deckel gelangen, ist es günstig im Sinne der Erfindung, wenn das Nivellierelement mit seiner vertikalen Wandung parallel zu einer Mittelachse des Behälters verläuft. Damit wird quasi eine verlängerte Einfüllöffnung durch das Nivellierelement gebildet, bei dem die Flüssigkeit im Inneren des Nivellierelementes derart beruhigt ist, daß eine Entstehung von Spritzern weitgehend ausgeschlossen ist.

Günstig im Sinne der Erfindung ist daher vorgesehen, daß sich das Nivellierelement derart in Richtung zum Boden erstreckt, daß sein freies Ende in die von dem Behälter aufgenommene Flüssigkeit eintaucht, also mit seinem freien Ende unterhalb der Flüssigkeitsoberfläche angeordnet ist.

In einer bevorzugten Ausgestaltung der Erfindung ist zweckmäßig vorgesehen, daß die Einfüllöffnung von einem Einfüllstutzen gebildet ist, der zwei Wandabschnitte aufweist, von denen ein erster Wandabschnitt aus dem Behälter herausragt und im Querschnitt gesehen parallel zur Mittelachse verläuft und konzentrisch um die Mittelachse angeordnet ist. Ein sich an den ersten Wandabschnitt anschließender zweiter Wandabschnitt ist im Behälterinneren mit seiner Stirnkante im Querschnitt gesehen zur Mittelachse orientiert, so daß sich die Einfüllöffnung in Richtung zum Boden konusartig verjüngt. Vorteilhafterweise ist nun vorgesehen, daß das Nivellierelement der Stirnkante des zweiten Wandabschnittes zugeordnet ist und konzentrisch um die Mittelachse angeordnet ist. Damit wird die sich zunächst verjüngende Einfüllöffnung durch das Nivellierelement bevorzugt sich nicht verjüngend, also in einem gleich bleibenden Querschnitt in Richtung zum Boden weiter geführt.

Damit das Nivellierelement die Bewegungen der Flüssigkeit, insbesondere in seinem Inneren, derart unterbindet, daß eine Entstehung von Spritzern, die zum Deckel gelangen könnten und diesen dann benetzen würden, ist zweckmäßig vorgesehen, daß das Nivellierelement Öffnungen aufweist. Gleichzeitig wird dafür Sorge getragen, daß das Nivellierelement die Flüssigkeit in dem Behälter nicht über ein ertragbares Maß hinaus verdrängt.

In einer bevorzugten Ausgestaltung des Nivellierelementes ist dieses aus Stäben gebildet, die bevorzugt senkrecht in Richtung zum Boden orientiert sind, und umfangsmäßig um die verjüngte Einfüllöffnung herum beabstandet sind, so daß zwischen den Stäben Öffnungen angeordnet sind.

In einer weiter bevorzugten Ausgestaltung der Erfindung ist das Nivellierelement als Sieb ausgestaltet.

In bevorzugten Ausgestaltungen der Erfindung kann das Nivellierelement zur Vereinfachung des Produktionsprozesses z. B. zusammen mit dem Behälter in einem Arbeitsgang hergestellt werden, also einstückig mit dem Behälter ausgebildet sein. Denkbar ist es auch, das Nivellierelement als separaten Einsatz oder als separate Einsätze im Behälter zu montieren und dort zu fixieren, z. B. kraft- und oder formschlüssig. Von Vorteil wäre es dabei, das bestehende Behälter und Behälterdeckel nicht geändert werden müssen.

Genauso vorteilhaft ist es, das Nivellierelement mit einem Behälterdeckel einstückig auszubilden oder als separates Teil oder bestehend aus mehreren separaten Teilen, die mit dem Deckel form- und/oder kraftschlüssig verbunden werden.

Gerät nun die Flüssigkeit in dem Behälter in Bewegung, so bewirkt das Nivellierelement zumindest in seinem Inneren, eine Beruhigung der Flüssigkeit, so daß eine Entstehung von Spritzern, welche den Deckel benetzen könnten, weitgehend vermieden ist. Aber auch außerhalb des Nivellierelementes kann eine Beruhigung der Flüssigkeit bewirkt werden. Sollten außerhalb des Nivellierelementes dennoch Spritzer entstehen, so würden diese sich aber an dem Außenumfang des Nivellierelementes niederschlagen und gelangen so ebenfalls nicht in Richtung zum Deckel, wodurch eine Benetzung mit Flüssigkeit des Deckels vermieden ist.

Vorteilhafterweise wird mit dem erfindungsgemäßen Nivellierelement eine Reduzierung der Reynoldszahl der in dem Behälter möglicherweise in Bewegung geratenen Flüssigkeit erreicht, was zu einer Einebnung der Flüssigkeitsoberfläche führt. Wie bereits angeführt, ist bevorzugterweise vorgesehen, daß das Nivellierelement entweder aus umfangsmäßig beabstandeten Stäben oder aus einem Sieb gebildet ist, um ein Bespritzen des Deckels zu verhindern. Dadurch, daß der Querschnitt der Einfüllöffnung durch das Nivellierelement nicht verjüngt wird, wird vorteilhafterweise der Einfüllprozeß, beispielsweise zum Auffüllen des Ausgleichsbehälters auf das erforderliche Flüssigkeitsniveau, nicht beeinflußt. Zusätzlich kann vorteilhafterweise ein Einfüllwerkzeug benutzt werden, das einem bekannten Einfüllwerkzeug unverändert entspricht.

Vorteilhafter Weise kann der Behälter bzw. Ausgleichsbehälter in seiner Höhenerstreckung relativ klein ausgestaltet werden, wobei die Flüssigkeitsoberfläche gleichzeitig relativ nah an die Einfüllöffnung herangeführt werden kann. Dies hat den Vorteil, daß den begrenzten Raumbedingungen am Einbauort des Behälters Rechnung getragen wird.

Weitere vorteilhafte Ausgestaltungen der Erfindung sind in den Unteransprüchen und der folgenden Figurenbeschreibung offenbart. Es zeigen:
- Fig. 1: einen Behälter im Querschnitt gesehen, und
- Fig. 2: den Behälter aus Figur 1 mit einer in Bewegung geratenen Flüssigkeit.

In den unterschiedlichen Figuren sind gleiche Teile stets mit denselben Bezugszeichen versehen, so daß diese in der Regel auch nur einmal beschrieben werden.

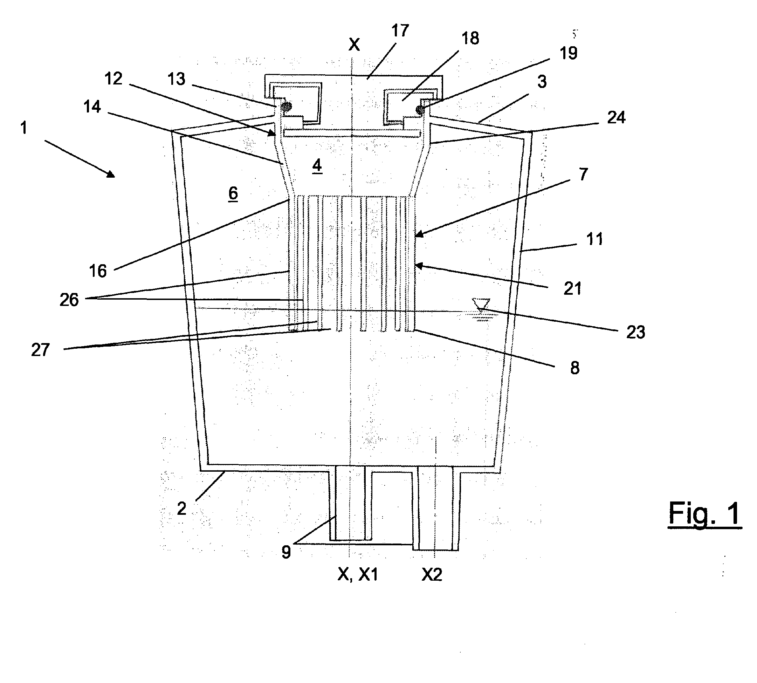

Figur 1 zeigt einen Behälter 1 mit einem Boden 2 und einem dazu gegenüberliegend angeordneten Kopfbereich 3. Der Kopfbereich 3 weist eine Einfüllöffnung 4 auf. Um die Einfüllöffnung 4 herum ist im Behälterinneren 6 ein Nivellierelement 7 angeordnet, das sich mit seinem freien Ende 8 in Richtung zum Boden 2 erstreckt.

In dem dargestellten Ausführungsbeispiel ist der Behälter 1 beispielsweise als Ausgleichsbehälter für eine Betriebsflüssigkeit eines Kraftfahrzeuges dargestellt.

In dem dargestellten Behälter 1 ist beispielsweise eine Flüssigkeit für eine Servo-Lenkanlage des Kraftfahrzeuges gespeichert.

An dem Boden 2 sind daher zwei in einer Horizontalrichtung Y beabstandete Stutzen 9 vorgesehen, mit denen beispielsweise Vor- und Rücklaufleitungen verbindbar sind. Einer der Stutzen 9 weist eine Mittelachse X1 auf, die kongruent zu einer Mittelachse X des Behälters 1 ist. Seitlich versetzt zu diesem ersten Stutzen 9 ist der zweite Stutzen 9 angeordnet, dessen Mittelachse X2 parallel zur Mittelachse X des Behälters 1 verläuft.

Dem Boden 2 ist eine Behälterwandung 11 zugeordnet, die sich vom Boden 2, bezogen auf die Mittelachse X, im Querschnitt gesehen in Richtung zum Kopfbereich 3 konusartig erweitert.

Die Einfüllöffnung 4 wird von einem Einfüllstutzen 12 gebildet. Der Einfüllstutzen 12 weist zwei Wandabschnitte 13, 14 auf, von denen ein erster Wandabschnitt 13 aus dem Behälter 1 herausragt und im Querschnitt gesehen parallel zur Mittelachse X verläuft und konzentrisch um die Mittelachse X herum angeordnet ist.

Ein sich an den ersten Wandabschnitt 13 anschließender zweiter Wandabschnitt 14 ist im Behälterinneren 6 mit seiner Stirnkante 16 im Querschnitt gesehen in Richtung zur Mittelachse X orientiert, so daß sich die Einfüllöffnung 4 in Richtung zum Boden 2 konusartig verjüngt.

Dem ersten Wandabschnitt 13 ist ein Deckel 17 zum Verschließen der Einfüllöffnung zugeordnet. Der Deckel 17 weist Belüftungsvorrichtungen 18 zur Belüftung des Behälters 1 sowie eine Dichtung 19, die in dem dargestellten Ausführungsbeispiel als O-Ring-Dichtung ausgestaltet ist, auf.

Das Nivellierelement 7 ist der Stirnkante 16 des zweiten Wandabschnitts 14 des Einfüllstutzens 12 zugeordnet. In dem dargestellten Ausführungsbeispiel erstreckt sich das Nivellierelement 7 mit seiner vertikalen Wandung 21 parallel zur Mittelachse X des Behälters 1 derart in Richtung zum Boden 2, daß das freie Ende 8 des Nivellierelementes 7 in die von dem Behälter 1 aufgenommene Flüssigkeit eintaucht. Dies ist in Figur 1 anhand der horizontal eingezeichneten Flüssigkeitsoberfläche 23 dargestellt. Hierbei ist deutlich zu sehen, daß das freie Ende 8 unterhalb der Flüssigkeitsoberfläche 23 angeordnet ist.

In dem bevorzugten Ausführungsbeispiel ist das Nivellierelement 7 der Stirnkante 16 des zweiten Wandabschnittes 14 zugeordnet und im Querschnitt gesehen konzentrisch um die Mittelachse X des Behälters 1 angeordnet. Selbstverständlich kann das Nivellierelement 7 aber auch dem Kopfbereich 3 zugeordnet sein und sich mit seinem freien Ende 8 in Richtung zum Boden 2 erstrecken und gleichzeitig unterhalb der Flüssigkeitsoberfläche 23 angeordnet sein. Möglich ist aber auch, daß das Nivellierelement 7 in einem Übergangsbereich 24 vom ersten Wandabschnitt 13 zum zweiten Wandabschnitt 14 angeordnet ist und sich in gleicher Weise in Richtung zum Boden 2 erstreckt. Natürlich kann auch vorgesehen sein, daß das Nivellierelement 7 den zweiten Wandabschnitt 14 ersetzt, wobei das Nivellierelement 7 dann abschnittsweise oder vollständig, im Querschnitt gesehen konusartig, ausgestaltet sein kann, so daß das freie Ende 8 sowohl in Richtung zum Boden 2 als auch in Richtung zur Mittelachse X des Behälters 1 orientiert ist. Natürlich kann das Nivellierelement 7 dann mit seiner vertikalen Wandung 21 im Querschnitt gesehen auch durchgängig parallel zur Mittelachse X verlaufen.

Im dem in Figur 1 bevorzugt dargestellten Ausführungsbeispiel ist das Nivellierelement 7 aus senkrechten Stäben 26 gebildet, die umfangsmäßig um die verjüngte Einfüllöffnung 4 herum beabstandet sind, so daß zwischen den vertikalen Stäben 26 eben solche vertikalen Öffnungen 27 bzw. Schlitze angeordnet sind. Die Öffnungen 27 erstrecken sich von dem freien Ende 8 bis zur Stirnkante 16, können aber in ihrer vertikalen Erstreckung selbstverständlich auch kürzer ausgestaltet sein.

Bei dem dargestellten bevorzugten Ausführungsbeispiel ist das Nivellierelement 7 aus einer Vielzahl von alternierend angeordneten Stäben 26 und Öffnungen 27 gebildet, wobei die Öffnungen 27 als Schlitz bevorzugt in einen Zylinder eingebracht sind. Natürlich kann das Nivellierelement 7 aber auch als Zylinder ausgestaltet sein, der zumindest zwei Öffnungen 27 aufweist, die bevorzugt diametral gegenüberliegend angeordnet sind. Das dann ausgestaltete Nivellierelement 7 hätte dann quasi zwei extrem breite, senkrechte halbschalenartige Stäbe 26.

Möglich ist aber auch, daß das Nivellierelement 7 als Sieb ausgestaltet ist.

Das Nivellierelement 7 ist in dem dargestellten Ausführungsbeispiel an seinem freien Ende 8 geöffnet, wobei selbstverständlich auch denkbar ist, daß das Nivellierelement 7 an seinem freien Ende 8 ein mit Öffnungen versehenes Fußteil aufweist. Dieses Fußteil kann im Querschnitt gesehen eben ausgestaltet sein, wobei auch denkbar ist, daß das Fußteil im Querschnitt gesehen gewölbt ausgestaltet ist, wobei die Wölbung in Richtung zum Boden 2 oder in Richtung zum Deckel 17 orientiert sein kann. Das Fußteil kann bei dem dargestellten Ausführungsbeispiel an den Stäben 26 angeordnet oder Bestandteil des Siebes sein. Bevorzugter Weise ist jedoch kein Boden bzw. Fußteil vorgesehen, um einen Einfüllprozeß, bzw. einströmende Flüssigkeit beim Befüllen nicht zu behindern. Natürlich kann auch auf ein Schwallblech oder Boden an der Einfüllöffnung 4 verzichtet werden, so daß der Einfüllprozeß ungehindert durchgeführt werden kann.

Die Wandung 21 des Nivellierelementes 7 verlängert quasi die Einfüllöffnung 4 bzw. den Einfüllstutzen 12 in Richtung zum Boden 2. Dadurch, daß der Querschnitt der Einfüllöffnung 4 durch die um die Mittelachse X konzentrisch angeordnete vertikale Wandung 21 nicht eingeschränkt wird, kann ein herkömmliches Einfüllwerkzeug benutzt werden, wobei gleichzeitig der Einfüllvorgang bzw. -prozeß zum Auffüllen des Behälters 1 nicht negativ beeinflußt wird.

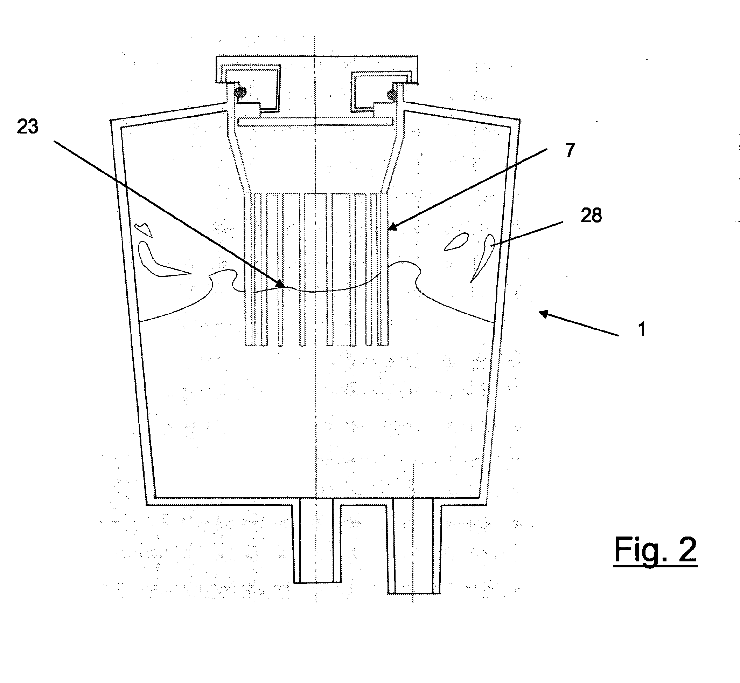

Aus Figur 2 ist entnehmbar, wie das Nivellierelement wirkt, wenn die in dem Behälter 1 aufgenommene Flüssigkeit in Bewegung gerät. Eine solche Flüssigkeitsbewegung kann beispielsweise bei dem Einbau des Behälters 1 in das Kraftfahrzeug oder beispielsweise bei rauen Straßenverhältnissen bzw. Oberflächenverhältnissen, auf denen sich das Kraftfahrzeug bewegt bzw. fährt, hervorgerufen werden.

Bei einer solchen Flüssigkeitsbewegung beginnt die in dem Behälter 1 aufgenommene Flüssigkeit zu schwappen, so daß die in Figur 1 dargestellte ebene Flüssigkeitsoberfläche 23 uneben wird.

In Figur 2 sind zwei Zustände der Flüssigkeit gezeigt, wobei außerhalb des Nivellierelementes 7 Schwappbewegungen und Spritzer 28 dargestellt sind. Innerhalb des Nivellierelementes 7 dagegen ist die Flüssigkeitsoberfläche 23 weitgehend eingeebnet, so daß ein Entstehen von Flüssigkeitsspritzern im Bereich des Inneren des Nivellierelementes 7 weitgehend verhindert ist, so daß eine Benetzung des Deckels 17 mit Flüssigkeit ausgeschlossen ist.

Das Nivellierelement 7 hat demnach eine Doppelfunktion. Zum einen verlängert das Nivellierelement 7 die Einfüllöffnung 4 in Richtung zum Boden 2, wobei Einfüllprozesse zum Auffüllen des Behälters 1 nicht negativ beeinflußt werden. Zum anderen bewirkt das Nivellierelement 7 eine Einebnung der Flüssigkeitsoberfläche, wenn die Flüssigkeit in dem Behälter 1 in Bewegung gerät, wodurch ein Entstehen von Spritzern und somit ein Benetzen der Deckelinnenoberfläche mit Flüssigkeit vermieden wird.

Durch die in Umfangsrichtung alternierenden Stäbe 26 und Öffnungen 27 ist das Nivellierelement 1 bevorzugt lamellenartig ausgestaltet, so daß auch ein Benetzen der Deckelinnenoberfläche mit Flüssigkeit von außerhalb des Nivellierelementes in dem Behälter ausgeschlossen ist. Durch das erfindungsgemäße Nivellierelement 1 wird die Reynoldszahl der bewegten Flüssigkeit reduziert, was eben zu der Einebnung der Flüssigkeitsoberfläche zumindest im Inneren des Nivellierelementes 7 führt.

Mittels des erfindungsgemäßen Nivellierelementes 7 kann die Flüssigkeit relativ nah an die Einfüllöffnung 4 herangeführt werden. Die Figuren 1 und 2 sind nicht maßstabsgerecht. Von daher ist der dargestellte Abstand der Flüssigkeitsoberfläche 23 zur Einfüllöffnung 4 übertrieben. Selbstverständlich kann das Nivellierelement 7 einstückig mit dem Einfüllstutzen 12 oder dem Behälter 1 hergestellt werden. Denkbar ist aber auch eine separate Herstellung mit anschließender Verbindung.

Bei dem dargestellten Ausführungsbeispiel gemäß den Figuren 1 und 2 verläuft das Nivellierelement 7 mit seiner Wandung 21 parallel zur Mittelachse X. Natürlich kann das Nivellierelement 7 mit seiner Wandung 21 bezogen auf die Mittelachse X geneigt sein. Denkbar ist auch, daß Nivellierelement 7 mit seiner Wandung 21 parallel zur Wandung 11 angeordnet sein kann, wobei natürlich ein bezogen auf die Wandung 11 anderer Verlauf als parallel möglich ist.

## Patentansprüche

1. Behälter mit einem Boden (2) und einem dazu gegenüberliegend angeordneten Kopfbereich (3), der eine Einfüllöffnung (4) aufweist, wobei die Einfüllöffnung (4) von einem Einfüllstutzen (12) gebildet ist, der zwei Wandabschnitte (13, 14) aufweist, von denen ein erster Wandabschnitt (13) aus dem Behälter (1) herausragt und im Querschnitt gesehen parallel zur Mittelachse (X) verläuft und konzentrisch um die Mittelachse (X) angeordnet ist, wobei ein sich an dem ersten Wandabschnitt (13) anschließender zweiter Wandabschnitt (14) im Behälterinneren (6) mit seiner Stirnkante (16) im Querschnitt gesehen in Richtung zur Mittelachse (X) orientiert ist, so daß sich die Einfüllöffnung (4) in Richtung zum Boden (2) konusartig verjüngt, und wobei ein im Behälterinneren (6) angeordnetes Nivellierelement (7) um die Einfüllöffnung (4) herum angeordnet ist und sich mit seinem freien Ende (8) in Richtung zum Boden (2) erstreckt,
**dadurch gekennzeichnet, daß**
das Nivellierelement (7) lamellenartig aus einer Vielzahl von Stäben (26) gebildet ist, zwischen denen Öffnungen (27) angeordnet sind, die sich von dem freien Ende (8) des Nivellierelementes (7) bis zur Stirnkante (16) erstrecken, so dass eine Flüssigkeitsoberfläche (23) im Bereich des Inneren des Nivellierelementes eingeebnet wird, wenn die Flüssigkeit in Schwappbewegung gerät, wobei die Stäbe (26) umfangsmäßig um die verjüngte Einfüllöffnung (4) herum beabstandet sind, wobei an dem Boden (2) zwei in Horizontalrichtung gesehen beabstandete Stutzen (9) vorgesehen sind, die jeweils mit Vorlauf- bzw. Rücklaufleitungen verbindbar sind, wobei einer der Stutzen (9) eine Mittelachse (X1) aufweist, welche Kongruent zu der Mittelachse (X) des Behälters (1) ist, wobei der zweite Stutzen (9), dessen Mittelachse (X2) parallel zur Mittelachse (X) des Behälters (1) verläuft, seitlich versetzt zu dem ersten Stutzen (9) angeordnet ist.

2. Behälter nach Anspruch 1,
**dadurch gekennzeichnet, daß**
das Nivellierelement (7) mit seiner vertikalen Wandung (21) parallel zu einer Mittelachse (X) des Behälters (1) verläuft.

3. Behälter nach Anspruch 1 oder 2,
**dadurch gekennzeichnet, daß**
sich das Nivellierelement (7) derart in Richtung zum Boden (2) erstreckt, daß sein freies Ende (8) in eine von dem Behälter (1) aufgenommene Flüssigkeit eintaucht.

4. Behälter nach einem der vorhergehenden Ansprüche
**dadurch gekennzeichnet, daß**
das Nivellierelement (7) der Stirnkante (16) des zweiten Wandabschnitts (14) zugeordnet ist und konzentrisch um die Mittelachse (X) herum angeordnet ist.

5. Behälter nach einem der Ansprüche 1 bis 4,
**dadurch gekennzeichnet, daß**
das Nivellierelement (7) als Sieb ausgestaltet ist.

6. Behälter nach mindestens einem der vorhergehenden Ansprüche
**dadurch gekennzeichnet, daß**
das Nivellierelement (7) mit dem Behälter einstückig ausgebildet ist oder als separater Einsatz oder separate Einsätze mit dem Behälter kraft- und/oder formschlüssig verbunden ist.

7. Behälter nach mindestens einem der Ansprüche 1 bis 5,
**dadurch gekennzeichnet, daß**
das Nivellierelement (7) mit einem Behälterdeckel einstückig ausgebildet ist oder als separates Teil oder Teile mit dem Behälterdeckel kraft- und/oder formschlüssig verbunden ist.

## Claims

1. Tank with a bottom (2) and a head region (3) which is arranged opposite thereto and has a filling opening (4), wherein the filling opening (4) is formed by a filling neck (12) which has two wall sections (13, 14) of which a first wall section (13) protrudes out of the tank (1) and, as seen in cross section, runs parallel to the centre axis (X) and is arranged concentrically about the centre axis (X), a second wall section (14) adjoining the first wall section (13) being oriented in the tank interior (6) with its end edge (16), as seen in cross section, in the direction of the centre axis (X), so that the filling opening (4) tapers conically in the direction of the bottom (2) and
a levelling element (7) which is arranged in the tank interior (6) is arranged around the filling opening (4) and extends with its free end (8) in the direction of the bottom (2),
**characterized in that**
the levelling element (7) is formed in a lamellar manner from a multiplicity of rods (26) between which openings (27) are arranged, the openings extending from the free end (8) of the levelling element (7) as far as the end edge (16) such that a liquid surface (23) in the region of the interior of the levelling element is evened out if the liquid begins to slosh, the rods (26) being spaced circumferentially around the tapered filling opening (4), two connecting pieces (9) which are spaced, as seen in the horizontal direction, and which can each be connected to forward-flow and return lines being provided at the bottom (2), one of the connecting pieces (9) having a centre axis (X1) which is congruent to the centre axis (X) of the tank (1), the second connecting piece (9), the centre axis (X2) of which runs parallel to the centre axis (X) of the tank (1), being offset laterally with respect to the first connecting piece (9).

2. Tank according to Claim 1,
**characterized in that**
the levelling element (7) runs with its vertical wall (21) parallel to a centre axis (X) of the tank (1).

3. Tank according to Claim 1 or 2,
**characterized in that**
the levelling element (7) extends in the direction of the bottom (2) in such a manner that its free end (8) dips into a fluid held by the tank (1).

4. Tank according to one of the preceding claims,
**characterized in that**
the levelling element (7) is assigned to the end edge (16) of the second wall section (14) and is arranged concentrically about the centre axis (X).

5. Tank according to one of Claims 1 to 4,
**characterized in that**
the levelling element (7) is designed as a strainer.

6. Tank according to at least one of the preceding claims,
**characterized in that**
the levelling element (7) is formed integrally with the tank or is connected as a separate insert or separate inserts to the tank in a non-positive and/or positive-locking manner.

7. Tank according to at least one of Claims 1 to 5,
**characterized in that**
the levelling element (7) is formed integrally with a tank lid or is connected as a separate part or parts to the tank lid in a non-positive and/or positive-locking manner.

## Revendications

1. Récipient comprenant un fond (2) et une région de tête (3) disposée en face du fond, qui présente une ouverture de remplissage (4), l'ouverture de remplissage (4) étant formée par une tubulure de remplissage (12) qui présente deux portions de paroi (13, 14), dont une première portion de paroi (13) fait saillie hors du récipient (1) et, vue en section transversale, s'étend parallèlement à l'axe médian (X) et est disposée concentriquement à l'axe médian (X), une deuxième portion de paroi (14) se raccordant à la première portion de paroi (13) à l'intérieur du récipient (6) étant orientée avec son arête frontale (16), vue en section transversale, dans la direction de l'axe médian (X), de sorte que l'ouverture de remplissage (4) se rétrécisse dans la direction du fond (2) en forme de cône, un élément de nivellement (7) disposé à l'intérieur du récipient (6) étant disposé autour de l'ouverture de remplissage (4) et s'étendant avec son extrémité libre (8) dans la direction du fond (2),
**caractérisé en ce que**
l'élément de nivellement (7) est formé en forme de lamelles à partir d'une pluralité de barres (26), entre lesquelles sont prévues des ouvertures (27) qui s'étendent depuis l'extrémité libre (8) de l'élément de nivellement (7) jusqu'à l'arête frontale (16), de sorte qu'une surface de liquide (23) dans la région de l'intérieur de l'élément de nivellement soit aplanie, lorsque le liquide est animé d'un mouvement de débordement, les barres (26) étant espacées sur la périphérie tout autour de l'ouverture de remplissage rétrécie (4), deux tubulures (9) espacées, vues dans la direction horizontale, étant prévues sur le fond (2), et pouvant être connectées à chaque fois à des conduites aller ou retour, l'une des tubulures (9) présentant un axe médian (X1) qui est en coïncidence avec l'axe médian (X) du récipient (1), la deuxième tubulure (9), dont l'axe médian (X2) s'étend parallèlement à l'axe médian (X) du récipient (1), étant disposée de manière décalée latéralement par rapport à la première tubulure (9).

2. Récipient selon la revendication 1,
**caractérisé en ce que**
l'élément de nivellement (7) s'étend avec sa paroi verticale (21) parallèlement à un axe médian (X) du récipient (1).

3. Récipient selon la revendication 1 ou 2,
**caractérisé en ce que**
l'élément de nivellement (7) s'étend dans la direction du fond (2) de telle sorte que son extrémité libre (8) plonge dans un liquide contenu dans le récipient (1).

4. Récipient selon l'une quelconque des revendications précédentes,
**caractérisé en ce que**
l'élément de nivellement (7) est associé à l'arête frontale (16) de la deuxième portion de paroi (14) et est disposé concentriquement autour de l'axe médian (X).

5. Récipient selon l'une quelconque des revendications 1 à 4,
**caractérisé en ce que**
l'élément de nivellement (7) est configuré sous forme de tamis.

6. Récipient selon au moins l'une des revendications précédentes,
**caractérisé en ce que**
l'élément de nivellement (7) est réalisé d'une seule pièce avec le récipient ou est connecté sous forme d'insert séparé ou d'inserts séparés par engagement par force et/ou par engagement par coopération de forme au récipient.

7. Récipient selon au moins l'une des revendications 1 à 5,
**caractérisé en ce que**
l'élément de nivellement (7) est réalisé d'une seule pièce avec un couvercle de récipient ou est connecté sous forme de pièce séparée ou de pièces séparées par engagement par force et/ou par engagement par coopération de forme au couvercle du récipient.
